# EUROPÄISCHE PATENTANMELDUNG

(11) **EP 2 933 313 A1**
(43) Veröffentlichungstag der Anmeldung: **21.10.2015**
(21) Anmeldenummer: 14164845.1
(22) Anmeldetag: 16.04.2014
(51) Int. Cl.: C09K 21/04

(54) **Brandschutzzusammensetzung und deren Verwendung**

(71) Anmelder: HILTI Aktiengesellschaft, 9494 Schaan (LI)
(72) Erfinder: Münzenberger, Herbert, 65191 Wiesbaden (DE); Wölfle, Ingrid, 86157 Augsburg (DE); Simon, Sebastian, 86807 Buchloe Lindenberg (DE)
(74) Vertreter: Hilti Aktiengesellschaft Corporate Intellectual Property

(57) **Zusammenfassung**

Es wird eine Zusammensetzung beschrieben, die ein Bindemittel auf Basis einer wässrigen oder Lösungsmittel-basierten Polymerdispersion, Brandschutzadditive, welche ein physikalisch wirkendes Treibmittel, eine Phosphor-haltige Verbindung, ausgewählt unter Salzen oder Estern der Oxosäuren des Phosphors, und Glasfasern umfassen, und einen säurebeständigen anorganischen Füllstoff umfasst, sowie deren Verwendung als Dichtmasse, insbesondere als Brandschutzdichtmasse.

## Beschreibung

Die Erfindung betrifft eine Zusammensetzung für Brandschutzanwendungen, insbesondere eine Dichtmasse auf Basis einer wässrigen oder Lösungsmittel-basierten Polymerdispersion sowie ihre Verwendung zur Abdichtung von Öffnungen, Kabel- und Rohrdurchführungen in Wänden, Böden und/oder Decken von Gebäuden, etc.

Für die Feuer- und Rauchabdichtung oder -abschottung von Öffnungen, Kabel- und Rohrdurchführungen in Wänden, Böden und/oder Decken, von Fugen zwischen Decken- und Wandteilen, zwischen Maueröffnungen und einzubauenden Konstruktionsteilen, wie Fenster- und Türstöcken, zwischen Decken und Wänden und zwischen Außenwänden und vorgehängten Fassaden von Gebäuden zum Zwecke der Wärmeisolation und/oder des Brandschutzes werden eine Reihe unterschiedlicher Dichtungsprodukte eingesetzt, die unter anderem als Dichtmassen vorliegen können.

Die Dichtmassen besitzen einen eigenständigen Anwendungsbereich bei Durchführungen von kunststoffisolierten Einzelkabeln, Kabelbündeln und Rohren durch Öffnungen in Wänden, Böden und/oder Decken von Gebäuden. Sehr häufig werden sie in Kombination mit anderen vorgefertigten Systemen, wie Blöcken oder Platten eingesetzt. Dieser Anwendungsbereich betrifft insbesondere das Verschließen von Öffnungen bei denen Kommunikationskabeln oder Rohrleitungen bereits verlegt sind.

Für die Zwecke des Brandschutzes werden den Dichtmassen Additive zugesetzt, welche bei erhöhter Temperatur, wie etwa im Brandfall, zu einem Expandieren bzw. Intumeszieren der Dichtmasse führen, somit eine isolierende Schicht bilden und ggf. die durch den Abbrand von Kunststoffrohrleitungen entstandene Öffnung verschließen.

Die DE 196 31 813 A1 beschreibt eine derartige Dichtmasse, die bei einer erhöhten Umgebungstemperatur, wie etwa in Folge eines Brandes, intumesziert. Die Dichtmasse enthält ein Bindemittel auf Basis einer Kombination aus einer Acrylat-Dispersion und einem Alkydharz, Brandschutzadditive, also solche, welche die Intumeszenz bewirken, Additive zur Stabilisierung der im Brandfall entstehenden Aschekruste, sogenannte Aschekrustenstabilisatoren sowie weitere Additive und Füllstoffe.

Ein Bindemittel auf Basis einer Kombination aus einer wässrigen Polymerdispersion und einem Alkydharz, das eine 75 %-ige Lösung in aromatischen Kohlenwasserstoffen, wie Xylol oder Toluol, ist, hat jedoch den Nachteil, dass die Lagerstabilität aufgrund des Wassers und der Lösungsmittelbestandteile begrenzt ist. Während der Lagerung werden das Wasser und die Lösungsmittel von den Füllstoffen aufgenommen, bzw. bei Konfektionierung in Kartuschen bei längerer Lagerung über die Kartuschenwandung abgegeben. Dadurch kann die Dispersion koagulieren und zerbrechen. Das Harz wird unverträglich und kristallisiert. Dadurch steigt die Viskosität der Masse und die pastöse Beschaffenheit der Zusammensetzung geht verloren. Dies beeinflusst sehr stark die Lagerstabilität der Zusammensetzung.

Gemäß der DE 196 31 813 A1 soll dieses Problem durch die Zugabe von Zellulose gelöst werden, wobei angenommen wurde, dass die Zellulose das Wasser der Dispersion bindet und diese vor dem Koagulieren bewahrt.

Die Zusammensetzung gemäß Beispiel 1 der DE 196 31 813 A1 enthält neben dem Brandschutzadditiv Ammoniumpolyphosphat ferner Zinkborat und Glasfasern als Aschekrustenstabilisatoren und unter anderem Kalziumcarbonat als Füllstoff, wobei der Anteil an Zinkborat mit etwa 12 Gew.-% relativ hoch ist.

Die beschriebene Zusammensetzung weist damit viele Bestandteile auf, welche die Zusammensetzung sehr komplex und auch teuer machen, insbesondere durch den hohen Anteil an Zinkborat.

Ferner ist daran nachteilig, dass trotz der Zugabe von Cellulose beim Mischen der Bestandteile der Zusammensetzung das Ammoniumpolyphosphat partiell beschädigt wird, wobei geringe Mengen feinteiligen Abriebs entstehen. Dieser Abrieb löst sich über die Lagerdauer oder durch Lagerung bei erhöhten Temperaturen langsam in den flüssigen Bestandteilen, hydrolysiert und setzt Phosphorsäure frei. Diese wiederum bewirkt eine Zersetzung der säurelabilen Bestandteile, wie das Kalziumkarbonat, unter Bildung von Kohlendioxid, was zu einer verringerten Lagerstabilität führt. Dieser Effekt verstärkt sich bei einer Lagerung bei erhöhten Temperaturen.

Die Aufgabe der Erfindung besteht nun darin, eine vereinfachte Zusammensetzung mit erhöhter Lagerstabilität bereitzustellen, die kostengünstiger herzustellen ist und deren Brandschutzeigenschaften trotz der vereinfachten Zusammensetzung nicht nachteilig beeinflusst werden.

Die Erfinder haben nun herausgefunden, dass die Zellulose nicht wie in der DE 196 31 813 A1 angenommen, die flüssigen Bestandteile in der Zusammensetzung bindet und die Dispersion stabilisiert sondern als Schutzkolloid fungiert, das beim Mischprozess die Scherkräfte und damit die Schädigung der weiteren festen Bestandteile der Zusammensetzung, wie etwa des Ammoniumpolyphosphates, deutlich verringert. Die Zugabe der Zellulose ist jedoch nicht ausreichend, eine vollständige Schädigung der festen Bestandteile, insbesondere des Ammoniumpolyphosphats beim Mischen zu verhindern. Daher besteht die latente Gefahr, dass sich während der Lagerung Säure bildet, insbesondere bei Lagerung über einen längeren Zeitraum und/oder bei erhöhter Temperatur.

Das Problem der Säureentwicklung wurde durch die gleichzeitige Verwendung von Zinkborat in der Formulierung, das die Säure teilweise gepuffert hat, kaum beobachtet. Erst Lagerversuche über einen langen Zeitraum bei 40°C machten eine verringerte Lagerstabilität sichtbar.

Die Erfinder haben nun herausgefunden, dass ausgehend von den Zusammensetzungen gemäß der DE 196 31 813 A1 sowohl auf die Zellulose als auch auf das teure Zinkborat verzichtet werden kann, ohne Einbußen bei den Brandschutzeigenschaften hinnehmen zu müssen, wenn statt den mit Säure reagierenden Füllstoffen, insbesondere des Kalziumcarbonats, säurebeständige Füllstoffe verwendet werden.

Überraschenderweise verringert sich die Stabilität der im Brandfall gebildeten Aschekruste auch ohne die Verwendung von Zinkborat nicht und es trat trotz der vereinfachten Zusammensetzung der Brandschutzadditive keine Verschlechterung der Brandschutzeigenschaften auf.

Ein Gegenstand der Erfindung ist somit eine Zusammensetzung, umfassend ein Bindemittel auf Basis einer wässrigen oder Lösungsmittel-basierten Polymerdispersion, Brandschutzadditive, welche ein physikalisch wirkendes Treibmittel, eine Phosphor-haltige Verbindung, ausgewählt unter Salzen oder Estern der Oxosäuren des Phosphors, und Glasfasern umfassen, und einen säurebeständigen anorganischen Füllstoff. Erfindungsgemäß ist die Zusammensetzung frei von Zinkborat und von Füllstoffen, die mit Säuren reagieren können.

Das Bindemittel ist erfindungsgemäß eine Polymerdispersion auf Wasser- oder Lösungsmittelbasis, insbesondere eine wässrige Polymerdispersion. Beispiele wässriger Polymerdispersionen, die sich in besonderem Masse bewährt haben, sind wässrige Acrylatdispersionen, wässrige Dispersionen bzw. Emulsionen von Harnstoff-, Formaldehyd- oder Melaminharzen, Polyvinylacetaten, Polyvinylalkoholen, Acrylnitril, Styrolacrylaten und ihrer Copolymere.

Bevorzugt enthält die erfindungsgemäße Zusammensetzung als Bindemittel eine wässrige Acrylat-(Copolymer)-Dispersion, besonders bevorzugt eine wässrige Dispersion eines Polyalkyl-(meth)acrylats und/oder eines Alkyl(meth)acrylat-Copolymers. Vorzugsweise handelt es sich dabei um wässrige Dispersionen, die man durch Polymerisation, namentlich durch Emulsionspolymerisation von Alkyl(meth)acrylaten und/oder durch Copolymerisation von Alkyl(meth)acrylaten mit sich und/oder mit copolymerisierbaren Comonomeren, wie vorzugsweise (Meth)acrylsäure, (Meth)acrylamid, Styrol, Itaconsäure, Acrylnitril und/ oder Citraconsäure erhält, wobei die Alkylgruppen der Alkyl(meth)acrylate bevorzugt 1 bis 6 C-Atome, bevorzugter 1 bis 4 C-Atome aufweisen. Erfindungsgemäß besonders bevorzugt sind wässrige Dispersionen von Polybutylacrylat, Polyethylhexylacrylat oder Alkyl(meth)acrylat-Styrol-Copolymeren. Die Acrylat-(Copolymer)-Dispersion kann sowohl Homopolymere als auch Copolymere oder auch Mischungen von Homopolymeren und/oder Copolymeren enthalten und wird so vorzugsweise mit einem pH-Wert im Bereich von 7 bis 9, vorzugsweise einen pH-Wert von 8, welcher erforderlichenfalls mit verdünnter Natronlauge oder Ammoniaklösung eingestellt wird, mit den anderen Bestandteilen vermischt. Diese wässrige Acrylat- (Copolymer)-Dispersion besitzt vorzugsweise einen Feststoffgehalt von 30 bis 70 Gew.-%, stärker bevorzugt von 45 bis 65 Gew.-%. Die erfindungsgemäß eingesetzten Acrylat-(Copolymer)-Dispersionen sind dem Fachmann bekannt und im Handel erhältlich. Die Erhärtung erfolgt physikalisch durch Trocknen.

Erfindungsgemäß wird die isolierende Schicht, die Aschekruste, durch ein physikalisch wirkendes Treibmittel gebildet, welche physikalische Intumeszenz bewirkt. Dementsprechend umfasst das Brandschutzadditiv mindestens eine thermisch expandierbare Verbindung, wie eine Graphit-Interkallationsverbindung, die auch als Blähgraphit bekannt ist, oder eine Schichtsilikat-Interkallationsverbindung, insbesondere solche mit erhöhtem Expansionsvolumen, die auch als expandierbare Schichtsilikate bekannt sind.

Als Graphit-Interkallationsverbindung (Blähgraphit) kommen beispielsweise bekannte Einlagerungsverbindungen von SOₓ, NOₓ, Halogen und/oder starken Säuren in Graphit in Frage. Diese werden auch als Graphitsalze bezeichnet. Bevorzugt sind Blähgraphite, die bei Temperaturen von beispielsweise 120 bis 350°C unter Aufblähen SO₂, SO₃, NO und/oder NO₂ abgeben. Der Blähgraphit kann beispielsweise in Form von Plättchen mit einem maximalen Durchmesser im Bereich von 0,1 bis 5 mm vorliegen. Vorzugsweise liegt dieser Durchmesser im Bereich 0,5 bis 3 mm. Für die vorliegende Erfindung geeignete Blähgraphite sind im Handel erhältlich. Im Allgemeinen sind die Blähgraphitteilchen in den erfindungsgemäßen Brandschutzelementen gleichmäßig verteilt. Die Konzentration an Blähgraphitteilchen kann aber auch punktuell, musterartig, flächig und/oder sandwichartig variiert sein. In dieser Hinsicht wird Bezug genommen auf die EP 1489136 A1, deren Inhalt hiermit in diese Anmeldung aufgenommen wird.

Als Schichtsilikat-Interkallationsverbindungen (expandierbare Schichtsilikate) kommen beispielsweise solche Verbindungen in Betracht, die durch Einlagerung von Interkallationsverbindungen in native, blähfähige Schichtsilikate, insbesondere nativen Vermiculit, erhältlich sind. Als Interkallationsverbindung sind Vertreter der Alkoholate von Lithium und Kalium und Salze von Lithium, Natrium und Kalium mit organischen Säuren bevorzugt, die durch Kationenaustausch in das native Schichtsilikat einlagert werden. In dieser Hinsicht wird Bezug genommen auf die DE 1029083 A1 sowie die darin genannte Literatur, z.B. EP 0 429 246 A1 deren Inhalte hiermit in diese Anmeldung aufgenommen werden.

Das physikalisch wirkende Treibmittel ist bevorzugt in einer Menge von etwa 5 bis 20 Gew.-%, bevorzugt 5 bis 10 Gew.-%, besonders bevorzugt 5 bis 7 Gew.-%, bezogen auf das Gesamtgewicht der Zusammensetzung, enthalten.

Da die im Brandfall durch das physikalisch wirkende Treibmittel und durch den Abbrand des Bindemittels gebildete Aschekruste in der Regel zu instabil ist und abhängig von deren Dichte und Struktur bereits durch Luftströmungen verblasen werden kann, was sich negativ auf die isolierende Wirkung der Beschichtung auswirkt, wird zu den eben aufgeführten Komponenten bevorzugt mindestens ein Aschekrustenstabilisator gegeben.

Ein *"Aschekrustenstabilisator"* ist eine sogenannte gerüstbildende Verbindung, die das Kohlenstoffgerüst (Aschekruste), das aus dem physikalisch wirkenden Treibmittel und dem Bindemittel gebildet wird, stabilisiert. Die prinzipielle Wirkungsweise ist dabei die, dass die an sich sehr weichen entstehenden Kohlenstoffschichten durch anorganische Verbindungen mechanisch verfestigt werden. Die Zugabe eines solchen Aschekrustenstabilisators trägt zu einer wesentlichen Stabilisierung der Intumeszenzkruste im Brandfall bei, da diese Additive die mechanische Festigkeit der intumeszierenden Schicht erhöhen und/oder deren Abtropfen verhindern, wodurch die isolierende Wirkung des Schaums aufrechterhalten oder verstärkt wird.

Als ein Aschekrustenstabilisator wird erfindungsgemäß eine Phosphor-haltige Verbindung verwendet, die unter Salzen und Derivaten der Oxosäuren des Phosphors ausgewählt ist. Die Oxosäuren des Phosphors werden eingesetzt, da deren Palette sehr groß ist. Bei den Oxosäuren des Phosphors handelt es sich um Phosphorsäure (H₃PO₄) (auch als Orthophosphorsäure bezeichnet), Diphospohrsäure (H₄P₂O₇) (auch als Pyrophosphorsäure bezeichnet), Triphosphorsäure (H₅P₃O₁₀), Polyphosphorsäure (Hₙ₊₂PₙO₃ₙ₊₁), Polymetaphosphorsäure ((HPO₃)ₙ), Hypophosphorsäure (H₄P₂O₆) (auch Diphosphor(IV)-säure), Diphosphor(III,V)-säure (H₄P₂O₆), Phosphonsäure (H₃PO₂(2), wobei die Zahl in der Klammer die maximale Basigkeit der Säure bezeichnet, wenn diese sich von der Gesamtzahlt der H-Atome in der Formel unterscheidet) (auch als phosphorige Säure bezeichnet), Diphosphonsäure (H₄P₂O₅(2), wobei die Zahl in der Klammer die maximale Basigkeit der Säure bezeichnet, wenn diese sich von der Gesamtzahlt der H-Atome in der Formel unterscheidet) (auch als diphosphorige Säure bezeichent), Phosphinsäure (H₃PO₂(1), wobei die Zahl in der Klammer die maximale Basigkeit der Säure bezeichnet, wenn diese sich von der Gesamtzahlt der H-Atome in der Formel unterscheidet.

Als Phosphorsäureverbindungen können beispielhaft erwähnt werden: Monoammoniumphosphat, Diammoniumphosphat, Ammoniumphosphat, Ammoniumpolyphosphat, Melaminphosphat, Melaminpolyphopsphate, Melaminharzphosphate, Kaliumphosphat, Polyolphosphate wie etwa Pentaerythritphosphat, Glyzerinphosphat, Sorbitphosphat, Mannitphosphat, Dulcitphosphat, Neopentylglykolphosphat, Ethylenglykolphosphat, Dipentaerythritphosphat und dergleichen. Bevorzugt wird als Phosphorsäureverbindung ein Polyphosphat oder ein Ammoniumpolyphosphat eingesetzt. Unter Melaminharzphosphaten sind dabei Verbindungen wie Umsetzungsprodukte aus Lamelite C (Melamin-Formaldehyd-Harz) mit Phosphorsäure zu verstehen.

Die Phosphor-haltige Verbindung ist in einer Menge von etwa 5 bis 15 Gew.-%, bevorzugt 7 bis 15 Gew.-%, besonders bevorzugt 9 bis 11 Gew.-%, bezogen auf das Gesamtgewicht der Zusammensetzung, enthalten.

Die Stabilität der Aschekruste kann noch weiter erhöht werden, in dem der Zusammensetzung zusätzlich weitere Aschekrustenstabilisatoren zugegeben werden.

Erfindungsgemäß enthält die Zusammensetzung als weiteren Aschekrustenstabilisator anorganische Fasern, insbesondere Faserkurzschnitte. Geeignete Fasern sind Glasfasern, insbesondere aus E-Glas, Silikatfasern oder Mineralwollfasern. Die Fasern haben bevorzugt eine Länger von 2 mm bis 12 mm, stärker bevorzugt 4 mm bis 8 mm und besonders bevorzugt 6 mm.

Die anorganischen Fasern sind bevorzugt in einer Menge von etwa 0,5 bis 4 Gew.-%, bevorzugt 1 Gew.-% bis 3 Gew.-%, besonders bevorzugt 1 Gew.-% bis 2,5 Gew.-%, bezogen auf das Gesamtgewicht der Zusammensetzung, enthalten.

Die Erfinder haben nun überraschend herausgefunden, dass gerade durch die Kombination von physikalisch wirkenden Treibmitteln, Phosphor-haltigen Verbindungen und anorganischen Fasern ein synergistischer Effekt erzielt wird und das Verblasen bzw. das Herausfallen der Aschekruste gegenüber anderen Brandschutzadditiven und insbesondere gegenüber den Einzelsubstanzen deutlich reduziert werden kann. Ohne dass die vorliegende Erfindung an eine Theorie gebunden oder dadurch beschränkt ist, nehmen die Erfinder an, dass der synergistische Effekt darauf beruht, dass die Glasfasern durch die Phosphor-haltige Verbindung, welche bei den im Brandfall herrschenden Temperaturen verglasen, verklebt werden und die expandierten Graphitpartikel fest in die Struktur eingebunden werden. Hierdurch können trotz der vereinfachten Zusammensetzung sehr harte und stabile Aschekrusten gebildet werden.

Darüber hinaus können weitere Brandschutzadditive, insbesondere solche, die eine chemische Intumeszenz bewirken, und solche, welche ablativ wirken, in der Zusammensetzung enthalten sein. Als *"chemische Intumeszenz"* wird die Bildung einer voluminösen, isolierenden Ascheschicht durch aufeinander abgestimmte Verbindungen, die bei Hitzeeinwirkung miteinander reagieren, bezeichnet. Diese sind im Allgemeinen ein Kohlenstofflieferant, ein Säurebildner und ein Treibmittel.

Als *"Kohlenstofflieferant"* wird eine organische Verbindung bezeichnet, die durch unvollständige Verbrennung ein Kohlenstoffgerüst hinterlässt und nicht vollständig zu Kohlendioxid und Wasser verbrennt (Carbonifizierung). diese Verbindungen werden auch als *"Kohlenstoffgerüstbildner"* bezeichnet. Als *"Säurebildner"* wird eine Verbindung bezeichnet, die sich unter Hitzeeinwirkung, d.h. oberhalb etwa 150°C beispielsweise durch Zersetzung eine nicht flüchtige Säure bildet und dadurch als Katalysator für die Carbonifizierung wirkt. Zudem kann sie zur Erniedrigung der Viskosität der Schmelze des Bindemittels beitragen. Hiermit gleichbedeutend wird der Begriff *"Dehydrierungskatalysator"* verwendet. Ein *"Treibmittel"* ist eine Verbindung, die sich bei erhöhter Temperatur unter Entwicklung inerter, d.h. nicht-brennbarer Gase zersetzt und das durch die Carbonifizierung gebildet Kohlenstoffgerüst und gegebenenfalls das Erweichte Bindemittel zu einem Schaum aufbläht (Intumeszenz). Dieser Begriff wird gleichbedeutend mit *"Gasbildner"* verwendet

Gegebenenfalls können die erfindungsgemäßen Zusammensetzungen weitere übliche Zusätze enthalten, wie Weichmacher, Füllstoffe, Pigmente, Additive zur Einstellung der rheologischen Eigenschaften, Verdickungsmittel, Dispergierhilfsmittel, Emulgatoren, Biozide, Fungizide, Konservierungs- und Alterungsschutzmittel, Frostschutzmittel, Netzmittel, Entschäumer und/oder Hautbildungsverzögerer. Diese weiteren Zusätze sind handelsübliche Produkte, die dem Fachmann auf dem Gebiet der Dichtmassen für insbesondere Bauzwecke bekannt sind.

Als Füllstoffe können die üblicherweise in Dichtmassen verwendeten und dem Fachmann bekannten Füllstoffe verwendet werden, solange sie keine Reaktion mit Säuren eingehen. Als Füllstoffe können beispielhaft erwähnt werden: Bariumsulfat, Quarz, Talkum, Kaolin, Calciumsulfat und/oder Calciumsilikat. Der Füllstoff kann alleine oder als Gemisch von zwei oder mehreren verwendet werden. Der Füllstoff ist bevorzugt ein kugelförmiger, insbesondere grobkörniger Füllstoff.

In einer bevorzugten Ausführungsform der Erfindung enthält die Zusammensetzung als Füllstoff einen kugelförmigen Füllstoff mit einer Korngröße zwischen 20 µm und 500 µm, bevorzugt zwischen 40 µm und 200 µm. Besonders bevorzugt ist der kugelförmige Füllstoff ein Leichtfüllstoff, wie Hohlglaskugeln, Schaumglaskugeln, Flugasche, keramische-Hohlkugeln, Glaskugeln und/oder Sande.

Die Verwendung der kugelförmigen Füllstoffe, insbesondere der Leichtfüllstoffe ist in einigen Punkten vorteilhaft. Durch deren Verwendung kann unter anderem die Dichte reduziert werden, die Verarbeitbarkeit der Masse verbessert, der Schrumpf auf ein auf ein Minimum reduziert und die Kosten der Zusammensetzung gesenkt werden.

Um eine bessere Verarbeitbarkeit zu erreichen, ist es jedoch erforderlich, dass die kugelförmigen Füllstoffe deutlich größer sind als die übrigen in der Zusammensetzung enthaltenen festen Bestandteile mit Ausnahme des physikalisch wirkenden Treibmittels. Völlig unerwartet hat die Größe des physikalisch wirkenden Treibmittels keinen Einfluss auf die Verarbeitbarkeit der Zusammensetzung, auch nicht bei hohen Faseranteilen. Erfindungsgemäß weißt daher der kugelförmige Feststoff eine Korngröße auf, welche größer ist als die Korngröße der übrigen in der Zusammensetzung enthaltenen Feststoffe.

Bevorzugt weisen die festen Bestandteile - ausgenommen das physikalisch wirkende Treibmittel - eine Korngröße unterhalb von 10 µm auf, so dass erfindungsgemäß der kugelförmige Füllstoff eine Korngröße oberhalb von 10 µm aufweist. Bevorzugt liegt die Korngröße des kugelförmigen Füllstoffes im Bereich von 20 µm bis 500 µm, stärker bevorzugt zwischen 30 µm und 300µm und besonders bevorzugt zwischen 40µm und 150 µm.

Die Füllstoffe sind bevorzugt in einer Menge von etwa 5 bis 15 Gew.-%, stärker bevorzugt 8 bis 12 Gew.-%, besonders bevorzugt 9 bis 11 Gew.-%, bezogen auf das Gesamtgewicht der Zusammensetzung, enthalten.

Als Pigmente kann die Zusammensetzung vorzugsweise Eisenoxid, Titandioxid, Zinksulfid, Zinkoxid und/oder organische oder anorganische Farbpigmente enthalten.

Als Additive zur Einstellung der theologischen Eigenschaften kann die erfindungsgemäße Zusammensetzung beispielsweise hochdisperse Kieselsäure, Bentonite, Polyacrylate und/oder Celluloseether enthalten.

Die Additive können in einer Menge von etwa 0,2 bis 5 Gew.-%, bevorzugt 0,2 bis 3 Gew.-%, bezogen auf das Gesamtgewicht der Zusammensetzung, enthalten sein.

Mit der erfindungsgemäßen Zusammensetzung kann eine Dichtmasse bereitgestellt werden, welche über einen längeren Zeitraum lagerstabil ist, auch bei erhöhten Temperaturen. Die Dichtmasse eignet sich insbesondere zur Feuer- und Rauchabdichtung oder -abschottung von Öffnungen, Kabel- und Rohrdurchführungen in Wänden, Böden und/oder Decken, von Fugen zwischen Decken- und Wandteilen, zwischen Maueröffnungen und einzubauenden Konstruktionsteilen, wie Fenster- und Türstöcken, zwischen Decken und Wänden und zwischen Außenwänden und vorgehängten Fassaden von Gebäuden. Sie erfüllt dabei den Zweck der Wärmeisolation und/oder des Brandschutzes, wobei sie die Anforderungen an die Brandschutzbestimmungen verschiedener Länder erfüllt.

Die folgenden Beispiele dienen der weiteren Erläuterung der Erfindung.

### AUSFÜHRUNGSBEISPIELE

Es wurden drei Zusammensetzungen mit den in der Tabelle 1 gezeigten Bestandteilen hergestellt und in Kartuschen abgefüllt. Bei den Additiven handelt es sich um für Dichtmassen übliche Additive, wie Entschäumer, Emulgatoren, Mittel zur Einstellung des pH-Wertes, Fungizide, Forstschutzmittel, Farbstoffe/Pigmente, Weichmacher und dergleichen.

Für die Beurteilung der Krustenfestigkeit werden aus den Massen Platten mit ca. 5 mm Dicke hergestellt und 2 Wochen bei Raumtemperatur und weitere 2 Wochen bei 50°C ausgehärtet. Aus diesen Platten werden Scheiben mit 50 mm ∅ ausgestanzt. Diese Scheiben werden auf einer Metallplatte bei 600°C 30 min verascht. Danach werden die entstandenen Aschenkörper mit einem Spatel zerdrückt und dabei die Festigkeit beurteilt. Eine Beurteilung mit dem Wert 1, bedeutet eine sehr geringe und eine Beurteilung mit dem Wert 6 bedeutet eine sehr hohe Aschekrustenstabilität.

Die nachfolgende Tabelle zeigt die Bestandteile und deren Mengen der Vergleichszusammensetzung (Vergleichsbeispiel) und der erfindungsgemäßen Zusammensetzungen (Beispiele 1, 2). Ferner sind in der Tabelle die Ergebnisse der Beurteilung der freien Expansion bei 600°C, der Krustenfestigkeit nach Veraschung bei 600°C und der Lagerstabilität bei Raumtemperatur (RT) gezeigt.

Wie ersichtlich ist, zeigen die Vergleichszusammensetzung und die erfindungsgemäßen Zusammensetzungen eine vergleichbare freie Expansion bei 600°C, jedoch ist sowohl die Krustenstabilität als auch die Lagerstabilität bei den erfindungsgemäßen Zusammensetzungen besser als die der Vergleichszusammensetzung.

| | **Vergleichsbeispiel** | **Beispiel 1** | **Beispiel 2** |
|---|---|---|---|
| Acrylat-Dispersion (65% Acrylat und 35% Wasser) | 31,0 Gew-% | 39,0 Gew-% | 39,0 Gew-% |
| Alkydharz | 4,1 Gew-% | | |
| Weichmacher / Tackifer (Indopol) | 6,0 Gew-% | | |
| Additive | 3,9 Gew-% | 6,0 Gew-% | 6,0 Gew-% |
| Kalziumkarbonat | 18,0 Gew-% | | |
| Kaolin (Capsil 2004) | | 37,0 Gew-% | 27,0 Gew-% |
| Schaumglaskugeln (Poraver 40-125µ) | | | 10,0 Gew-% |
| Blähgraphit | 5,5 Gew-% | 5,5 Gew-% | 5,5 Gew-% |
| Talkum | 8,0 Gew-% | | |
| Zinkborat | 12,0 Gew-% | | |
| Glasfasern | 1,2 Gew-% | 2,2 Gew-% | 2,2 Gew-% |
| Ammoniumpolyphosphat | 10,0 Gew-% | 10,0 Gew-% | 10,0 Gew-% |
| Zellulose, der 4 % Wasser zugegeben sind | 0,3 Gew-% | 0,3 Gew-% | 0,3 Gew-% |
| | | | |
| | 100,0 Gew-% | 100,0 Gew-% | 100,0 Gew-% |
| | | | |
| freie Expansion bei 600°C | 1 : 15 | 1 : 15 | 1: 15 |
| Krustenfestigkeit nach Veraschung bei 600°C | 5 | 6 | 6 |
| | | | |
| Lagerstabilität in Kartuschen bei RT | 9 Monate | 18 Monate | 18 Monate |

## Patentansprüche

1. Zusammensetzung, umfassend
- ein Bindemittel auf Basis einer wässrigen oder Lösungsmittel-basierten Polymerdispersion,
- Brandschutzadditive, welche
o ein physikalisch wirkendes Treibmittel,
o eine Phosphor-haltige Verbindung, ausgewählt unter Salzen oder Estern der Oxosäuren des Phosphors, und
o Glasfasern umfassen, und
- einen säurebeständigen anorganischen Füllstoff,
mit der Maßgabe, dass die Zusammensetzung frei von Zinkborat und von Füllstoffen, die mit Säuren reagieren können, ist.

2. Zusammensetzung nach Anspruch 1, wobei die Oxosäure des Phosphors unter Orthophosphorsäure, Pyrophosphorsäure, Triphosphorsäure oder Polyphosphorsäure ausgewählt ist.

3. Zusammensetzung nach Anspruch 2, wobei die Phosphor-haltige Verbindung aus der Gruppe ausgewählt ist, bestehend aus Monoammoniumphosphat, Diammoniumphosphat, Ammoniumphosphat, Melaminharzphosphaten, Kaliumphosphat, Melaminphosphat, Ammoniumpolyphosphat und Melaminpolyphosphaten.

4. Zusammensetzung nach einem der vorhergehenden Ansprüche, wobei das physikalisch wirkende Treibmittel unter Graphit-Interkallationsverbindungen und/oder Schichtsilikat-Interkallationsverbindungen ausgewählt ist.

5. Zusammensetzung nach Anspruch 4, wobei das physikalisch wirkende Treibmittel unter Graphit-Interkallationsverbindungen ausgewählt ist.

6. Zusammensetzung nach einem der vorhergehenden Ansprüche, wobei der säurebeständige anorganische Füllstoff aus der Gruppe ausgewählt ist, bestehend aus Kaolin, Schwerspat (BaSO₄), Leichtspat (CaSO₄), Talkum und Silikaten sowie Gemischen davon.

7. Zusammensetzung nach einem der vorhergehenden Ansprüche, wobei das Bindemittel auf Basis einer wässrigen oder Lösungsmittel-basierten Polymerdispersion eine Acrylat-(Copolymer)-Dispersion umfasst.

8. Zusammensetzung nach einem der vorhergehenden Ansprüche, die ferner weitere Additive und/oder Füllstoffe enthält.

9. Verwendung einer Zusammensetzung nach einem der Ansprüche 1 bis 8 als Dichtmasse.

10. Verwendung nach Anspruch 9 als Brandschutzdichtmasse.
